**Europäisches Patentamt**

(19) **European Patent Office**

**Office européen des brevets**

(11) Publication number : **0 401 789 B1**

## (12) EUROPEAN PATENT SPECIFICATION

(45) Date of publication of patent specification :
03.11.93 Bulletin 93/44

(51) Int. Cl.⁵ : **B01J 20/02,** B01J 20/10,
B01D 53/34, B01J 20/34

(21) Application number : 90110702.9

(22) Date of filing : 06.06.90

(54) Selective removal of hydrogen sulfide over a zinc oxide and diatomite absorbing composition.

(30) Priority : 07.06.89 US 363030

(43) Date of publication of application :
12.12.90 Bulletin 90/50

(45) Publication of the grant of the patent :
03.11.93 Bulletin 93/44

(84) Designated Contracting States :
AT BE CH DE DK ES FR GB GR IT LI LU NL SE

(56) References cited :
EP-A- 0 309 910
FR-A- 2 295 782
GB-A- 1 232 062
GB-A- 2 202 546

(73) Proprietor : PHILLIPS PETROLEUM COMPANY
5th and Keeler
Bartlesville Oklahoma 74004 (US)

(72) Inventor : Kidd, Dennis Raymond
Rt. 1, Box 82A
Bartlesville, OK 74006 (US)
Inventor : Delzer, Gary Albert
1308 Hillsdale Rd.
Bartlesville, OK 74006 (US)
Inventor : Kubicek, Donald Hubert
2902 Georgetown Ct.
Bartlesville, OK 74006 (US)
Inventor : Schubert, Paul Frederick
2709 SE Hillsboro
Bartlesville, OK 74006 (US)

(74) Representative : Geissler, Bernhard, Dr. jur.,
Dipl.-Phys. Patent- und Rechtsanwälte et al
Bardehle-Pagenberg-Dost-
Altenburg-Frohwitter-Geissler & Partner
Postfach 86 06 20
D-81633 München (DE)

EP 0 401 789 B1

## Description

### Background of the Invention

This invention relates to an improved composition and process for selectively removing hydrogen sulfide from gaseous streams.

The removal of sulfur from fluid streams can be desirable or necessary for a variety of reasons. If the fluid stream is to be released as a waste stream, removal of sulfur from the fluid stream can be necessary to meet the sulfur emmission requirements set by various air pollution control authorities. Such requirements are generally in the range of 10 ppm to 500 ppm of sulfur in the fluid stream. If the fluid stream is to be burned as a fuel, removal of sulfur from the fluid stream can be necessary to prevent environmental pollution. If the fluid stream is to be processed, removal of the sulfur is often necessary to prevent the poisoning of sulfur sensitive catalysts or to satisfy other process requirements.

A variety of methods employing regenerable, solid contact materials are known for removing sulfur from a fluid stream when the sulfur is present as hydrogen sulfide. For example, United States Patent Number 4,088,736 discloses a composition comprising zinc oxide, alumina, and a Group IIA metal which is an effective absorbing composition for hydrogen sulfide and which possesses the property of being regenerable to the original absorbing composition state in the presence of oxygen when fully sulfided.

The French patent publication FR-A 295 782 discloses a method for purification of a gas containing hydrogen sulfide, where the gas is contacted with a composition comprising zinc oxide, alumina and a metal oxide of a Group IIA metal.

Although the absorbing compositions employed in such methods may effectively absorb hydrogen sulfide from a fluid stream containing hydrogen sulfide, it has been found that many of these absorbing compositions effectively oxidize significant amounts of hydrogen sulfide to sulfur dioxide. The resulting sulfur dioxide is not absorbed by the absorbing compositions and, thus, passes unabsorbed through the contact material. In view of the fact that environmental concerns are focused on the total amount of sulfur contained in an effluent stream, and not just the amount of hydrogen sulfide, passing sulfur dioxide through the contact material and out to the environment is not acceptable under current environmental standards.

### Summary of the Invention

It is thus an object of the present invention to provide an improved process for selectively removing hydrogen sulfide from fluid streams containing hydrogen sulfide without producing a treated fluid stream containing significant amounts of sulfur dioxide. It is a further object of this invention to provide an improved absorbing composition which possesses the property of being regenerable to the original absorbing composition state in the presence of oxygen when fully sulfided.

It has been found, in accordance with the present invention, that the addition of diatomite to zinc oxide provides an absorbing composition that is very effective in the removal of hydrogen sulfide from a fluid stream containing hydrogen sulfide, while significantly reducing, in comparison to various known absorbing compositions, the amount of hydrogen sulfide that is oxidized to sulfur dioxide during the absorption process .

### Detailed Description of the Invention

In accordance with the present invention, an absorbing composition is provided as defined in the claims. The composition comprises zinc oxide, diatomite and at least one metal oxide promoter. Additionally, the absorbing composition may contain one or more binders. Once the absorbing composition of the present invention has been prepared, fluid streams containing hydrogen sulfide are contacted with the absorbing composition according to the process of the invention as defined in the claims. Contacting is done under suitable absorbing conditions to substantially reduce the concentration of hydrogen sulfide in the fluid stream without significantly increasing the concentration of sulfur dioxide therein.

It is believed that the hydrogen sulfide is being absorbed by the absorbing composition and thus the terms "absorption process" and "absorbing composition" are utilized for the sake of convenience. However, the exact chemical phenomenon occurring is not the inventive feature of the process of the present invention and the use of the term "absorb" in any form is not intended to limit the present invention.

The selective absorption process is preferably carried out in cycles comprising an absorption period and a period for the regeneration of the sulfided absorbing composition. The absorption period comprises contacting a gaseous stream which contains hydrogen sulfide with the absorbing composition to thereby selectively remove hydrogen sulfide from the gaseous stream. The absorbing composition becomes sulfided during the absorption period. When the absorbing composition becomes sulfided to the point that regeneration is desirable, preferably when it is nearly completely sulfided, an oxygen-containing gas is passed in contact with the absorbing composition to regenerate the absorbing composition and to convert the absorbed sulfur to a sulfur oxide.

The chemical changes that are believed to occur in the absorbing composition during this cyclic process are summarized in the following equations:

$$(I) \qquad ZnO + H_2S \rightarrow ZnS + H_2O$$
$$(II) \qquad ZnS + Oxygen \rightarrow ZnO + SO_x$$

Other advantages of the invention will be apparent from the foregoing description of the invention and the appended claims as well as from the detailed description of the invention which follows.

The absorbing composition of the present invention may be utilized to remove hydrogen sulfide from any suitable gaseous stream. The hydrogen sulfide may be produced by the hydrodesulfurization of organic sulfur compounds or may be originally present in the gaseous stream as hydrogen sulfide. Examples of such suitable gaseous streams include light hydrocarbons such as methane, ethane and natural gas; gases derived from petroleum products and products from extraction and/or liquefaction of coal and lignite; gases derived from tar sands and shale oil; coal derived synthesis gas; gases such as hydrogen and nitrogen; gaseous oxides of carbon; steam and the inert gases such as helium and argon. Gases that adversely affect the removal of hydrogen sulfide and which should be absent from the gaseous streams being processed are oxidizing agents, examples of which include air, molecular oxygen, the halogens, and the oxides of nitrogen.

The absorbing composition of the present invention may be utilized to remove hydrogen sulfide from olefins such as ethylene. This process, however, should be carried out in the absence of free hydrogen to avoid hydrogenation. Olefin streams should not be hydrodesulfurized as this may result in undesirable hydrogenation of at least a portion of the olefins to paraffins.

In one embodiment of the present invention, the absorbing composition comprises zinc oxide and diatomite, promoted with nickel oxide. Additionally, the absorbing compositions can further contain binders.

The absorbing composition employed in the process of the present invention may be prepared by any suitable method known in the art. Examples of such suitable methods include coprecipitation, dry mixing of solids, and slurrying. Once the absorbing composition has been prepared, it may be formed into a suitable contact material by any suitable method known in the art. Examples of such suitable methods include extrusion, pelletization, tabletting, and spray drying.

A preferred method for preparing the absorbing composition employed in the process of the present invention is to combine diatomite, zinc oxide, and, if present, a binder in a mixer. After mixing these components to form a mixture thereof, a dilute acid is then added with continued mixing to the resulting mixture to thereby form an extrudable paste. The extrudable paste is then extruded, dried, and calcined to form the absorbing composition. Due to the abrasive nature of silica in the form of diatomite, and its destructive effect on extrusion equipment, it may be desirable to include a lubricant, such as graphite, as a component in the original mixture. The lubricant is then removed from the resulting composition during the calcination step, either by combustion or by conversion of the lubricant to a metal oxide promoter in accordance with the present invention.

In view of the equipment wear caused by extruding the abrasive diatomite, an alternative method for forming the absorbing composition may be desired. One example of such a method is to pelletize a mixture of diatomite, zinc oxide, and, if present, a binder in the presence of a dilute acid by employing a disk or drum pelletizer. The mixture of diatomite, zinc oxide, and, if present, a binder may be prepared in the manner described above, or may be prepared in other suitable apparatus, such as a double cone blender.

In a preferred embodiment of the present invention, nickel oxide or its precursor as the metal promoter is added to the extruded, dried, and calcinated composition, and the now-promoted composition is dried and calcined a second time to form the promoted absorbing composition. Alternatively, the nickel oxide or its precursor may be included as a component of the original mixture, thus reducing the number of times the composition must be dried and calcined to form the promoted absorbing composition.

The zinc oxide used in the preparation of the absorbing composition may be either in the form of zinc oxide, or in the form of one or more zinc compounds that are convertible to zinc oxide under the conditions of preparation described herein. Examples of such zinc compounds include zinc sulfide, zinc sulfate, zinc hydroxide, zinc carbonate, zinc acetate, and zinc nitrate. Preferably, the zinc oxide is in the form of powdered zinc oxide.

The silica used in the preparation of the absorbing composition is in the form of diatomite.

In accordance with the preferred method previously described herein, diatomite, zinc oxide ,and, if present, a binder are initially combined in a mixer. To achieve the desired dispersion of these materials, the materials are blended until a homogenous mixture is formed. The mixing time will generally be in the range of 1.0 minute to 45 minutes, and will preferably in the range of 2.0 minutes to 15 minutes.

Any suitable binder may be added to the absorbing composition employed in the process of the present invention. A suitable binder is considered to be any material that improves the physical strength of the final absorbing composition without having a significant adverse effect on the performance of the absorbing composition in the process of the present invention, such as a significant increase in the amount of hydrogen sulfide being oxidized to sulfur dioxide by the absorbing composition. Examples of suitable binders include alumina and calcium aluminate. The binders may be added in any form suitable for combination with the silica and zinc oxide. For example, the binder may be in the form of a solid material, a dry powder, or a sol.

When the silica, zinc oxide, and, when present, binder have been blended within the mixer for the desired amount of time, a dilute acid is then added, with continued mixing, to the resulting mixture to thereby form an extrudable paste. The dilute acid may be added to the resulting mixture by any suitable method. Preferably, the dilute acid is added to the resulting mixture by spraying it within the mixer during continued mixing.

Any suitable acid may be used in the preparation of the absorbing composition. Examples of suitable acids include nitric acid, acetic acid, sulfuric acid, and hydrochloric acid, with acetic acid being presently preferred. The acid concentration in the dilute acid employed in the preparation of the absorbing composition will generally be in the range of 1.0 weight-% to 15 weight-%, and will preferably be in the range of 1.0 weight-% to 5.0 weight-%, said weight-% being expressed in terms of the concentrated acid based upon the total weight of the dilute acid.

It has been discovered that the amount of water that is added to the resulting mixture, in the form of the dilute acid, to form the extrudable paste has an effect on the particle crush strength of the resulting absorbing composition. Thus, to prepare absorbing compositions having higher particle crush strengths, the amount of water added to the resulting mixture will generally be in the range of 0.26 to 0.38 kg water/kg solids (0.26 lbs water/lbs solids to 0.38 lbs water/lbs solids), and will preferably be less than about 0.30 kg water/kg solids (0.30 lbs water/lbs solids).

After adding the dilute acid to the resulting mixture, the acidized mixture will generally continue to be mixed for a period of time in the range of 5 minutes to 60 minutes, preferably in the range of 10 minutes to 30 minutes, thereby forming the extrudable paste.

The extrudable paste may either be directly extruded or may be aged prior to being extruded. It has been discovered that whether or not the extrudable paste is aged has an effect on the physical properties of the resulting absorbing composition and, further, that this effect varies with the type and concentration of dilute acid used and the liquids to solids ratio used in the preparation of the extrudable paste. Thus, for example, when employing acetic acid in the preparation of the absorbing composition, a higher crush strength material may be obtained by extruding the extrudable paste as soon as practically possible, without significant aging. When low concentration nitric acid is employed at a low liquids to solids ratio, however, a higher crush strength material may be obtained by allowing the extrudable paste to age for a period of time prior to extruding it. The desirability of aging the extrudable paste, with respect to any suitable acid and liquids to solids ratio, may be determined by routine experimentation. Thus, in accordance with the present invention, the extrudable paste may be aged for any suitable amount of time. The extrudable paste will generally be aged for a period of time in the range of 0 minutes to 120 minutes, and will preferably be aged for a period of time in the range of 0 minutes to 60 minutes.

The extrudable paste is then extruded by methods well known in the art. The extruded material is then dried at a temperature generally in the range of 75°C to 300°C, and more preferably in the range of 90°C to 250°C, for a period of time generally in the range of 0.5 hour to 4 hours, and more preferably in the range of 1 hour to 3 hours. The dried, extruded material is then calcined in the presence of oxygen at a temperature generally in the range of 375°C to 750°C, and more preferably in the range of 500°C to 700°C, for a period of time generally in the range of 0.5 hour to 4 hours, and more preferably in the range of 1 hour to 3 hours to produce the absorbing composition employed in the process of the present invention.

The zinc oxide will generally be present in the absorbing composition in an amount in the range of 10 weight-% to 90 weight-%, and will more preferably be in the range of 45 weight-% to 90 weight-%, and will most preferably be in the range of 45 weight-% to 60 weight-%, when said weight-%'s are expressed in terms of the zinc oxide based upon the total weight of the absorbing composition.

The diatomite will generally be present in the absorbing composition in an amount in the range of 10 weight-% to 90 weight-%, and will more preferably be in the range of 30 weight-% to 60 weight-%, when said weight-%'s are expressed in terms of the silica based upon the total weight of the absorbing composition.

The binder, when present, will generally be present in the absorbing composition in an amount in the range of 5.0 weight-% to 30 weight-%, and will more preferably be in the range of 5.0 weight-% to 15 weight-%, when said weight-%'s are expressed in terms of the weight of the binder compared with the total weight of the absorbing composition.

The absorbing composition employed in the process of the present invention is promoted with suitable metal oxides. Examples of suitable metal oxides include the oxides of molybdenum, tungsten, one or more metals selected from Group VIII of the Periodic Table, and any other metal that is known to have hydrogenation ability of the type necessary to reduce sulfur oxide species to hydrogen sulfide. In a preferred embodiment of the present invention, the absorbing composition is promoted with nickel oxide.

The metal oxide promoter may be added to the absorbing composition in the form of the elemental metal, metal oxide, and/or metal-containing compounds that are convertible to metal oxides under the calcining conditions described herein. Some examples of such metal-containing compounds include metal acetates, metal carbonates, metal nitrates, metal sulfates, metal thiocyanates, and mixtures of two or more thereof.

The elemental metal, metal oxide, and/or metal-containing compounds can be added to the absorbing composition by any method known in the art. One such method is the impregnation of the absorbing composition with a solution, either aqueous or organic, that contains the elemental metal, metal oxide, and/or metal-containing compounds. After the elemental metal, metal oxide, and/or metal-containing compounds have been added to the absorbing composition, the promoted composition is dried and calcined, as described hereinafter.

As previously noted herein, the elemental metal, metal oxide, and/or metal-containing compounds can be added to the absorbing composition as components of the original mixture, or they may be added after the absorbing composition has initially been dried and calcined. If the metal oxide promoter is added to the absorbing composition after it has initially been dried and calcined, then the now-promoted composition is dried and calcined a second time to form the promoted absorbing composition. The now-promoted composition is generally dried at a temperature in the range of 75°C to 300°C, more preferably in the range of 90°C to 250°C, for a period of time generally in the range of 0.5 hour to 8 hours, more preferably in the range of 3 hours to 5 hours. The dried, promoted composition is then calcined in the presence of oxygen generally at a temperature in the range of 375°C to 750°C, and more preferably in the range of 500°C to 700°C, until volatile matter is removed and the elemental nickel and/or the nickel-containing compounds are substantially converted to nickel oxides. The time required for this calcining step will generally be in the range of 0.5 hour to 4 hours, and will preferably be in the range of 1 hour to 3 hours.

The metal oxide promoter will generally be present in the absorbing composition in an amount ranging from 0.1 weight-% to 15 weight-%, and will more preferably be in the range of 2.0 weight-% to 7.5 weight-%, most preferably about 6.0 weight-%, said weight-%'s being expressed in terms of the metal oxide based upon the total weight of the absorbing composition.

The processes of the present invention can be carried out by means of any apparatus whereby there is achieved an alternate contact of the absorbing composition with the gaseous feed stream and, thereafter, of the absorbing composition with an oxygen-containing gas which is utilized to regenerate the absorbing composition. The process is in no way limited to the use of a particular apparatus. The process of this invention can be carried out using a fixed bed of absorbing composition, a fluidized bed of absorbing composition, or a moving bed of absorbing composition. Presently preferred is a fixed bed of absorbing composition.

In order to avoid any casual mixing of the gaseous feed stream containing hydrogen sulfide with the oxygen-containing gas utilized in the regeneration step, provision is preferably made for terminating the flow of the gaseous feed stream to the reactor and subsequently injecting an inert purging fluid such as nitrogen, carbon dioxide or steam. Any suitable purge time can be utilized but the purge should be continued until all hydrocarbon and/or hydrogen sulfide are removed. Any suitable flow rate of the purge fluid may be utilized. Presently preferred is a purge fluid flow rate in the range of about 800 GHSV to about 1200 GHSV.

Any suitable temperature for the processes of the present invention may be utilized. The temperature will generally be in the range of 150°C to 600°C and will more preferably be in the range of 200°C to 450°C.

Any suitable temperature may be utilized to regenerate the absorbing composition from its sulfided form back to the original absorbing composition form. The temperature will generally be in the range of 370°C to 815°C. As a result of parallel work, however, it has been discovered that the higher temperatures required to intiate the regeneration of ZnS to ZnO (i.e. about 650°C and higher) has an adverse effect on the amount of sulfur dioxide that is produced during the subsequent absorption cycle. Due to the fact that the regeneration of NiS to NiO is an exothermic reaction, and the fact that this reaction is initiated at a lower temperature (i.e. about 425°C), the presence of nickel oxide in the absorbing composition employed in the process of the present invention allows the regeneration to occur at a lower temperature, thereby preventing the adverse effect described above. Thus, the regeneration temperature is preferably in the range of 425°C to 600°C, most preferably about 425°C, to effect the regeneration within a reasonable time while not adversely affecting the production of sulfur dioxide in the treated gaseous feed stream.

Any suitable pressure can be utilized for the processes of the present invention. The pressure of the gaseous feed stream being treated is not believed to have an important effect on the absorption process of the present invention, and will generally be in the range of from atmospheric to 13.8 MPa (2,000 psig) during the treatment.

Any suitable residence time for the gaseous feed stream in the presence of the absorbing composition of the present invention can be utilized. The residence time expressed as volumes of gas at standard temperature and pressure per volume of absorbing composition per hour will generally be in the range of 10 to 10,000 and will more preferably be in the range of 250 to 2500.

When the absorbing composition is completely sulfided it will no longer combine with the hydrogen sulfide in the manner set forth in equation (I). When this condition occurs, hydrogen sulfide will begin to appear in the effluent flowing from the reaction and this will be an indication that the absorbing composition should preferably be regenerated. The time required for the absorbing composition to become completely sulfided will generally be a function of the concentration of sulfur in the feedstock and feed rate employed.

When the absorbing composition becomes substantially completely sulfided, the absorbing composition is typically regenerated by terminating the flow of feed to the reactor and purging with an inert fluid such as nitrogen to remove any combustibles. A free oxygen-containing gas is then introduced to the reactor for the purpose of oxidizing the zinc sulfide in accordance with equation (II).

The amount of oxygen supplied to the reactor during the regeneration step will generally be sufficient to at least substantially remove sulfur from the absorbing composition. The regeneration step is generally conducted at about atmospheric pressure. The temperature for the regeneration step is generally maintained in the range of 370°C to 815°C, and is more preferably maintained at 425°C in order to oxidize the zinc sulfide within a reasonable time.

The following examples are presented in further illustration of the invention.

Example I

In this example the experimental procedure for the removal of hydrogen sulfide from gas streams containing hydrogen sulfide by means of various solid sorbent materials is described.

The tests were carried out in a single reactor unit comprising a 20 mm O.D. Quartz reactor and a 2 mm thermocouple well. The reactor, which was maintained at a pressure of about 11.7 KPa (1.7 psig), was operated in a fixed bed down flow mode using 10 grams of sorbent. Within the reactor, the sorbent was heated to the reaction temperature in a stream of nitrogen. When the desired temperature was attained, the nitrogen flow was stopped, and the simulated sulfur plant gas and water vapor flows (the water content was about 12% of the gaseous stream) were started. The water vapor was generated by pumping water through a heated line within the reactor. The reaction was carried out at a reaction temperature of about 425°C and a gas hourly space velocity of 2500 cc/cc catalyst/hour. The composition of the simulated sulfur plant gas was as follows: 4.35 volume-% hydrogen sulfide, 39.9 volume-% carbon dioxide, and 55.75 volume-% nitrogen.

The progress of the absorption was followed by measuring the concentration of hydrogen sulfide and/or the sulfur dioxide in the reactor effluent after the water vapor had been condensed and removed from the effluent. The concentration of hydrogen sulfide and/or sulfur dioxide was measured with Draeger tubes that were suited to the concentration ranges encountered.

Once the sorbents became fully sulfided, as evidenced by hydrogen sulfide breakthrough, the flow of the simulated sulfur plant gas to the reactor was halted and the reactor was purged with nitrogen for a period of about 20 minutes while being heated to a regeneration temperature in the range of 621°C to 676°C. The sulfided sorbent was then regenerated in the presence of air for about 1.5 hours. Following regeneration, the reactor was again purged with nitrogen for about 40 minutes while being cooled back down to the reaction temperature of about 425°C. The nitrogen purge was then halted and the simulated sulfur plant gas was fed to the reactor to begin another absorption cycle.

Example II

This example describes the sorbent materials which were tested in accordance with the procedures set forth in Example I.

Sorbent A: comprised $Ni/ZnO/Al_2O_3$ wich 7.0 weight-% Ni (as NiO), 46.5 weight-% ZnO and 46.5 weight-% $Al_2O_2$. Sorbent A was prepared in the following manner: First, ZnO powder (Lot 052579; Alfa Products Division, Morton Thiokol, Inc.; Danvers, MA) was ground to a particle size of 0.074 mm (200 mesh). Next, about 61.2 grams of $\alpha$-alumina monohydrate were dispersed in 500 mL of water with stirring. 4.4 mL of concentrated nitric acid were then added to the solution to form an acidic solution comprising alumina. Next, a ZnO hydrosol was prepared by slurrying 50.5 grams of the ground ZnO powder in 150 ml of water. After stirring the acidic solution comprising alumina for about 10 minutes, the ZnO hydrosol was added, with rapid stirring, to the acidic solution comprising alumina, and a hydrogel of zinc oxide and alumina was quickly formed. The hydrogel of zinc oxide and alumina was then transferred to an evaporating dish and dried at a temperature of about 120°C for about 12 hours. The dried hydrogel was then calcined in air at 500°C for a period of 3 hours. The BET/$N_2$

surface area of the calcined hydrogel was about 60 m²/g. 50 grams of the calcined hydrogel were then impregnated with a solution containing 17.3 grams of $Ni(NO_3)_2 \cdot 6H_2O$ (Lot 022381; Alfa Products Division, Morton Thiokol, Inc.; Danvers, MA) and 33 grams of $H_2O$. Not all of the solution could be added to the calcined hydrogel, so the partially-impregnated hydrogel was partially dried under a heat lamp before continuing with the impregnation of the rest of the solution. The impregnated hydrogel was then dried for 3 hours at about 110°C, and then calcined at 500°C for an additional 3 hours to form Sorbent A.

Sorbent B: comprised $Ni/ZnO/SiO_2$ with 6.0 weight-% Ni (as NiO), 47 weight-% ZnO and 47 weight-% $SiO_2$. Sorbent B was prepared in the following manner: 50 grams of ZnO (St. Joe Minerals Corporation (now Horsehead Industries); Palmerton, PA) were combined with 50 grams of $SiO_2$ (Cab-o-sil silica; Cabot Corporation; Tuscola, IL). The combined ZnO and $SiO_2$ were dry mixed for about 3 minutes prior to being mulled in a solution containing 118.4 grams of $H_2O$ and 1.48 grams of $HNO_3$, although only 66.30 grams of the solution were used to reach a desired consistency. The resulting extrudate was dried overnight in air and then dried at 110°C for about 3 hours. The dried extrudate was then calcined at about 500°C for about 3 hours. About 25 grams of the calcined extrudate was then impregnated with a solution containing 7.43 grams of $Ni(NO_3)_2 \cdot 6H_2O$ (Lot 022381; Alfa Products Division, Morton Thiokol, Inc.; Danvers, MA) and 18.25 grams of $H_2O$. After impregnation, the impregnated extrudate was dried under a heat lamp for about 1 hour, then dried at about 110°C for about 3 hours, and finally calcined at 500°C for 3 hours to form Sorbent B.

Sorbent C: comprised $Ni/ZnO/SiO_2$ with 6.0 weight-% Ni (as NiO), 47 weight-% ZnO and 47 weight-% $SiO_2$. Sorbent C was prepared in the following manner: 50 grams of ZnO (St. Joe Minerals Corporation (now Horsehead Industries); Palmerton, PA) were combined with 50 grams of $SiO_2$ (Diatomaceous earth; Fisher Scientific Company; Pittsburg, PA). The combined ZnO and $SiO_2$ as diatomite were dry mixed for about 3 minutes prior to being mulled in a solution comprising 118.44 grams of $H_2O$ and 1.48 grams of $HNO_3$, although only 54.41 grams of the solution were used to reach a desired consistency. The resulting extrudate was dried overnight in air and then dried at 110°C for about 3 hours. The dried extrudate was then calcined at about 500°C for about 3 hours. About 25 grams of the calcined extrudate was then impregnated with a solution containing 7.43 grams of $Ni(NO_3)_2 \cdot 6H_2O$ (Lot 022381; Alfa Products Division, Morton Thiokol, Inc.; Danvers, MA) and 9.32 grams of $H_2O$. After impregnation, the impregnated extrudate was dried under a heat lamp for about 1 hour, then dried at about 110°C for about 3 hours, and finally calcined at 500°C for 3 hours to form Sorbent C.

Example III

This example illustrates the use of the sorbents described in Example II within the procedure described in Example I for the removal of $H_2S$ from a simulated sulfur plant gas. The results are presented as a function of the amount of sulfur dioxide (measured in ppm) present in the effluent gaseous stream at a point in time 10 minutes into the absorption cycle, and of the total amount of sulfur absorbed by the sorbent (measured on a weight basis) at the time of hydrogen sulfide breakthrough. The cycle number listed is the number of the absorption cycle in which the reading was taken during an ongoing test comprising repeated cycles of absorption and regeneration. The test results are summarized in Table I.

## Table I

| Run | Sorbent | Composition | Cycle # | SO2 Level | Sulfur Loading |
|---|---|---|---|---|---|
| 1 (Control) | A | Ni/ZnO/Al$_2$O$_3$ | 6 | 1800 | 9.5 |
|  |  |  | 7 | 1680 | 8.5 |
| 2 (Control) | B | Ni/ZnO/SiO$_2$ | 1 | 0 | 10.0 |
|  |  | (Cab-O-Sil) | 5 | 600 | 9.9 |
|  |  |  | 6 | 600 | 9.9 |
|  |  |  | 12 | 600 | 9.9 |
|  |  |  | 36 | 800 | 9.9 |
| 3 (Invention) | C | Ni/ZnO/SiO$_2$ | 5 | -- | 9.8 |
|  |  | (Diatomite) | 29 | -- | 10.0 |
|  |  |  | 34 | -- | 9.0 |
|  |  |  | 39 | 384 | 10.6 |
|  |  |  | 45 | 352 | 10.7 |

A comparison of the results set forth in Table 1 clearly shows that replacing the alumina in Sorbent A with silica (Sorbents B and C) dramatically reduces the amount of hydrogen sulfide that is oxidized to sulfur dioxide during the absorption cycle of the inventive process, thereby significantly reducing the amount of sulfur dioxide that passes unabsorbed through the absorbing bed. Additionally, a review of the sulfur loadings set forth in Table 1 demonstrates that the absorbing composition employed in the process of the present invention (Run 3) is highly effective in the removal of hydrogen sulfide. Finally, a comparison of the results of Run 3 with those of Runs 1 and 2 shows why diatomite is the silica for use in the absorbing composition employed in the process of the present invention.

### Example IV

This example describes the methods that were used to prepare the sorbent materials that are intended to illustrate the different methods that may be used in accordance with the present invention to add nickel oxide to the absorbing compositions of the present invention.

All of the sorbents prepared in this example, except for Sorbent G, comprise Ni/ZnO/SiO$_2$/Al$_2$O$_3$ with 6.0 weight-% Ni (as NiO), 47 weight-% ZnO, 38 weight-% SiO$_2$, and 9.0 weight-% Al$_2$O$_3$. The ZnO used to form these sorbents was obtained from St. Joe Minerals Corporation, the silica was Celite Filter-Cel Silica (a diatomite from Johns-Manville Corporation; Denver, CO), and the alumina was Catapal D (Vista Chemical Company; Houston, TX).

Sorbent D: Sorbent D was prepared by initially forming a nitric acid solution which contains 80 mL of a nickel nitrate solution, Ni(NO$_3$)$_2$·6H$_2$O mixed in water at a concentration of 1.073 g of nickel nitrate hexahydrate/mL solution, and 35 mL of water. This solution was then stirred for 10 minutes. Next, 113 grams of silica, 36 grams of alumina, 142 grams of zinc oxide, and 3 grams of graphite are combined in a sigma mixer, and the resulting mixture is allowed to mix for about 5 minutes. The nickel nitrate solution is then added to the resulting mixture

and mixing is continued for about 15 minutes. The resulting paste is then extruded, and the extrudate is dried at 140°C for about 3 hours. The dried extrudate is then calcined at 635°C for about 3 hours to form Sorbent D.

Sorbent E: Sorbent E was prepared by initially combining, with stirring, 15 mL of concentrated acetic acid and 112 mL of water to form an acetic acid solution. This solution was then stirred for about 10 minutes. Next, 113 grams of silica, 36 grams of alumina, 142 grams of zinc oxide, 3 grams of graphite, and 22 grams of nickel oxide (Novamet Specialty Products; Wyckoff, NJ) are combined in a sigma mixer, and the resulting mixture is allowed to mix for about 5 minutes. The acetic acid solution is then added to the resulting mixture, and mixing is continued for about 15 minutes. The resulting paste is then extruded, and the extrudate is dried at 140°C for about 3 hours. The dried extrudate is then calcined at 635°C for about 3 hours to form Sorbent E.

Sorbent F: Sorbent F was prepared by initially combining, with stirring, 0.14 kg (0.316 lbs) of alumina, 0.03 kg (0.072 lbs) of concentrated acetic acid, and 0.49 kg (1.083 lbs) of distilled water to form an alumina sol. 0.45kg (1.0 lb) of silica was then added to the alumina sol and the resulting mixture was mixed for about 10 minutes. 0.57 kg (1.25 lbs) of zinc oxide was then added to the resulting mixture and mixing was continued for about 10 minutes to form an extrudable paste. The resulting extrudable paste was allowed to age for about 30 minutes and was then extruded to form an extrudate. The extrudate was then dried at 140°C for about 3 hours, and was subsequently calcined at 635°C for about 45 minutes. The calcined extrudate was then spray impregnated with about 260 grams of a nickel nitrate solution (0.87 grams $Ni(NO_3)_2 \cdot 6H_2O$/mL solution) and 12.7 grams of distilled water. The impregnated extrudate was then dried overnight at about at 140°C. The dried extrudate is then calcined at 635°C for about 45 minutes to form Sorbent F.

Sorbent G: Sorbent G comprises 6.0 weight-% Ni (as NiO), 47 weight-% ZnO, and 47 weight-% alumina. Sorbent G was prepared by initially combining 10.02 kg (22.1 lbs) of ZnO and 12.66 kg (27.9 lbs) of alumina. This mixture was mixed for about 5 minutes. About 9.25 kg (20.4 lbs) of a 13.45 wt-% nitric acid solution was then added to the mixture, and mixing was continued for about 5 minutes to form an extrudable paste. The extrudable paste was allowed to age for about 30 minutes, and was then extruded to form an extrudate. The extrudate was dried at 135°C for about 3 hours, and was then calcined for about 45 minutes at 635°C. The calcined extrudate was then impregnated with a nickel nitrate solution, and the impregnated extrudate was again dried and calcined, in the manner discussed above, to form Sorbent G.

Example V

This example illustrates the use of the sorbents described in Example IV within the procedure described in Example I for the removal of $H_2S$ from a simulated sulfur plant gas. The results are presented as a function of the amount of sulfur dioxide (measured in ppm) present in the effluent gaseous stream at a point in time 10 minutes into the absorption cycle, and of the total amount of sulfur absorbed by the sorbent (measured on a weight basis) at the time of hydrogen sulfide breakthrough. The test results are summarized in Table II.

## Table II

| Run | Sorbent | Cycle # | SO2 Level | Sulfur Loading |
|---|---|---|---|---|
| 1 (Invention) | D | 1 | -- | 12.3 |
| | | 2 | 548 | 13.4 |
| | | 14 | 545 | 10.8 |
| | | 19 | 525 | 13.4 |
| | | 23 | 541 | 14.0 |
| | | 24 | 514 | 13.7 |
| | | 27 | 563 | 13.8 |
| | | 32 | 528 | 13.5 |
| | | 35 | 528 | 14.1 |
| | | 50 | 510 | 13.3 |
| 2 (Invention) | E | 2 | -- | 12.1 |
| | | 6 | 553 | 13.4 |
| | | 10 | 470 | 12.7 |
| | | 23 | 487 | 13.0 |
| | | 27 | 600 | 14.0 |
| | | 40 | 600 | 13.8 |
| 3 (Invention) | F | 1 | -- | 13.3 |
| | | 2 | 600 | 12.8 |
| | | 6 | 600 | 12.4 |
| | | 8 | 600 | 11.5 |
| | | 11 | 600 | 12.2 |
| | | 33 | 380 | 10.4 |
| | | 39 | 371 | 10.7 |
| | | 44 | 340 | 10.2 |
| | | 50 | 346 | 10.2 |
| 4 (Control) | G | 13 | 1500 | 6.1 |
| | | 17 | 1000 | 7.3 |
| | | 29 | 1100 | 7.4 |
| | | 35 | 1200 | 7.5 |
| | | 42 | 1100 | 7.9 |
| | | 54 | 900 | 6.9 |

The data contained in Table II demonstrates that the nickel promoter employed in one embodiment of the present invention can be included as an original component in the preparation of the absorbing composition (Sorbents A and B) or that it may be added as a promoter to an existing absorbing composition (Sorbent C). Additionally, the data demonstrates that the nickel promoter may be added in the form of nickel oxide (Sorbent B), or in the form of a nickel compound that is convertible to nickel oxide (Sorbent A). Regardless of how the nickel promoter is added to the absorbing composition, it is evident from the above data that the resulting composition is an effective absorbing composition for hydrogen sulfide, that does not readily oxidize hydrogen sulfide to sulfur dioxide during the absorption cycle of the process of the present invention. Finally, a comparison of Run 4 with Runs 1-3 clearly illustrates the superiority, in terms of both an ability to absorb sulfur and avoid oxidizing hydrogen sulfide to sulfur dioxide, of the inventive absorbing compositions over an absorbing composition containing alumina.

**Claims**

1. A composition comprising zinc oxide, diatomite, at least one metal oxide promoter and optionally at least one binder.

**10**

2. A composition in accordance with claim 1 wherein said zinc oxide is present in said composition in an amount in the range of 10 weight-% to 90 weight-%, in particular in the range of 45 weight-% to 90 weight-%, more particularly in the range of 45 weight-% to 60 weight-%, being expressed in terms of the zinc oxide based upon the total weight of the composition.

3. A composition in accordance with claim 1 wherein said diatomite is present in said composition in an amount in the range of 30 weight% to 60 weight-%, said weight-% being expressed in terms of the diatomite based upon the total weight of the composition.

4. A composition in accordance with claim 1 wherein said binder is present in said composition in an amount in the range of 5.0 weight% to 30 weight-%, said weight-% being expressed in terms of the binder based upon the total weight of the composition.

5. A composition in accordance with claim 1 or 2 wherein said zinc oxide is present in said composition in an amount in the range of 45 weight-% to 60 weight-%, said diatomite is present in said composition in an amount in the range of 30 weight-% to 60 weight-%, and said binder is present in an amount in the range of 5.0 weight-% to 15 weight-%, based upon the total weight of the composition.

6. A composition in accordance with claim 1 wherein said at least one metal oxide promoter is present in said composition in an amount in the range of 0.1 weight-% to 15 weight-%, said weight-% being expressed in terms of the at least one metal oxide promoter based upon the total weight of the composition.

7. A composition in accordance with claim 1 wherein said zinc oxide is present in said composition in an amount in the range of 45 weight-% to 60 weight-%, said diatomite is present in said composition in an amount in the range of 30 weight-% to 60 weight-%, and said at least one metal oxide promoter is present in an amount in the range of 2.0 weight-% to 7.5 weight-%, based upon the total weight of the composition.

8. A composition in accordance with claim 1 or 2 wherein said zinc oxide is present in said composition in an amount in the range of 45 weight-% to 60 weight-%, said diatomite is present in said composition in an amount in the range of 30 weight-% to 60 weight%, said at least one binder is present in said composition in an amount in the range of 5.0 weight-% to 15 weight-%, and said at least one metal oxide promoter is present in an amount in the range of 2.0 weight-% to 7.5 weight-%, based upon the total weight of the composition.

9. A composition in accordance with claims 4, 5 or 8 wherein said binder is alumina or calcium aluminate.

10. A composition in accordance with claims 6, 7 or 8 wherein said at least one metal oxide promoter is an oxide of at least one metal selected from the group consisting of molybdenum, tungsten, and the metals of Group VIII of the Periodic Table, in particular wherein said promoter is nickel oxide.

11. A composition in accordance with claim 1 or 2 wherein said composition is prepared by a process comprising the steps of:
    a) mixing zinc oxide or a precursor of zinc oxide, diatomite, at least one binder, when present, in particular in the form of a solid material, a dry powder or a sol, and at least one metal oxide promoter, when present, or a precursor of at least one metal oxide promoter, when present, to form a homogeneous mixture thereof;
    b) adding a dilute acid to said homogeneous mixture to form an extrudable paste;
    c) extruding said extrudable paste to form an extrudate;
    d) drying said extrudate; and
    e) calcining the dried extrudate to produce said composition.

12. A composition in accordance with claim 11 wherein said precursor of zinc oxide is selected from the group consisting of zinc sulfide, zinc sulfate, zinc hydroxide, zinc carbonate, zinc acetate, and zinc nitrate; said at least one binder when present is selected from the group consisting of alumina and calcium aluminate; said precursor of at least one metal oxide when present is selected from the group consisting of metal acetates, metal carbonates, metal nitrates, metal sulfates, metal thiocyanates, and mixtures of two or more thereof; said dilute acid is a dilute solution of an acid selected from the group consisting of nitric acid, acetic acid, sulfuric acid, and hydrochloric acid; the concentration of said acid in said dilute acid is in the range of 1.0 weight-% to 15 weight-% based upon the total weight of the dilute acid; the amount of dilute acid added to said homogeneous mixture results in an amount of water being added to said homogeneous mixture in the range of 0.26 to 0.38 kg water/kg solids (0.26 lbs to 0.38 lbs water/lbs solids); said extrudate is dried at a temperature in the range of 75°C to 300°C for a period of time in the range of 0.5 hour to 4 hours; and, said dried extrudate is calcined in the presence of oxygen at a temperature in the range of 375°C to 750°C for a period of time in the range of 0.5 hour to 4 hours to produce said composition.

13. A composition in accordance with claim 11 wherein said composition is prepared by the process comprising the steps of:

a) mixing powdered zinc oxide with diatomite to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours; and,

e) calcining the dried extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs to 0.30 lbs water/lbs solids).

14. A composition in accordance with claim 5 wherein said composition is prepared by the process comprising the steps of:

a) mixing powdered zinc oxide, diatomite, and alumina as said binder to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours; and,

e) calcining the dried extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs to 0.30 lbs water/lbs solids).

15. A composition in accordance with claim 7 wherein said composition is prepared by the process comprising the steps of:

a) rnixing powdered zinc oxide, diatomite, and nickel oxide or nickel nitrate as said promoter to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours; and,

e) calcining the dried extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs to 0.30 lbs water/lbs solids).

16. A composition in accordance with claim 10 wherein said composition is prepared by:

a) mixing zinc oxide or a precursor of zinc oxide with diatomite to form a homogeneous mixture thereof;

b) adding a dilute acid to said homogeneous mixture to form an extrudable paste;

c) extruding said extrudable paste to form an extrudate;

d) drying said extrudate;

e) calcining the dried extrudate;

f) adding at least one metal oxide promoter or at least one precursor of at least one metal oxide promoter to the dried, calcined extrudate to produce a promoted extrudate;

g) drying said promoted extrudate; and,

h) calcining the dried, promoted extrudate to produce said composition.

17. A composition in accordance with claim 16 wherein said precursor of zinc oxide is selected from the group consisting of zinc sulfide, zinc sulfate, zinc hydroxide, zinc carbonate, zinc acetate, and zinc nitrate; said dilute acid is a dilute solution of an acid selected from the group consisting of nitric acid, acetic acid, sulfuric acid, and hydrochloric acid; the concentration of said acid in said dilute acid is in the range of 1.0 weight-% to 15 weight-% based upon the total weight of the dilute acid; the amount of dilute acid added to said homogeneous mixture results in an amount of water being added to said homogeneous mixture in the range of 0.26 to 0.38 kg water/kg solids (0.26 lbs to 0.38 lbs water/lbs solids); said extrudate is dried at a temperature in the range of 75°C to 300°C for a period of time in the range of 0.5 hour to 4 hours; said dried extrudate is calcined in the presence of oxygen at a temperature in the range of 375°C to 750°C for a period of time in the range of 0.5 hour to 4 hours to produce said composition; said precursor of at least one metal oxide is selected from the group consisting of metal acetates, metal carbonates, metal nitrates, metal sulfates, metal thiocyanates, and mixtures of two or more thereof; said promoted extrudate is dried at a temperature in the range of 75°C to 300°C for a period of time in the range of 0.5 hour to 8 hours; and, said dried, promoted extrudate is calcined in the presence of oxygen at a temperature in the range of 375°C to 750°C for a period of time in the range of 0.5 hour to 4 hours to produce said composition.

18. A composition in accordance with claim 7 wherein said composition is prepared by the process comprising the steps of:

a) mixing powdered zinc oxide and diatomite to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours;

e) calcining the dried extrudate in the presence of oxygen at a temperature in the range of 500°C to 700°C for a period of time in the range of 1 hour to 3 hours;

f) adding nickel oxide or nickel nitrate to the dried, calcined extrudate to produce a promoted extrudate;

g) drying said promoted extrudate at a temperature in the range of 90°C to 250°C for a period of time in the range of 3 hours to 5 hours; and,

h) calcining the dried, promoted extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs to 0.30 lbs water/lbs solids).

19. A composition in accordance with claim 8 wherein said composition is prepared by the process comprising the steps of:

a) mixing powdered zinc oxide, diatomite, alumina as said binder, and nickel oxide or nickel nitrate as said promoter to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours; and,

e) calcining the dried extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs water/lbs solids to 0.30 lbs water/lbs solids).

**20.** A composition in accordance with claim 8 wherein said composition is prepared by the process comprising the steps of:

a) mixing powdered zinc oxide, diatomite, and alumina as said binder to form a homogeneous mixture thereof;

b) adding dilute acetic acid, having an acid concentration in the range of 1.0 weight-% to 5.0 weight-% based upon the total weight of the dilute acid, to said homogeneous mixture to form an extrudable paste;

c) extruding said extrudable paste to form an extrudate;

d) drying said extrudate at a temperature in the range of 90°C to 250°C for a period of time in the range of 1 hour to 3 hours;

e) calcining the dried extrudate in the presence of oxygen at a temperature in the range of 500°C to 700°C for a period of time in the range of 1 hour to 3 hours;

f) adding nickel oxide or nickel nitrate as said promoter to the dried, calcined extrudate to produce a promoted extrudate;

g) drying said promoted extrudate at a temperature in the range of 90°C to 250°C for a period of time in the range of 3 hours to 5 hours; and,

h) calcining the dried, promoted extrudate in the presence of oxygen at a temperature in the range of 500°C to 700°C for a period of time in the range of 1 hour to 3 hours to produce said composition,

wherein the amount of dilute acetic acid added to said homogeneous mixture results in an amount of water being added to said homogeneous mixture in the range of 0.26 to 0.30 kg water/kg solids (0.26 lbs to 0.30 lbs water/lbs solids).

**21.** A process for removing hydrogen sulfide from a fluid stream containing hydrogen sulfide comprising the step of of contacting said fluid stream under suitable absorbing conditions with an absorbing composition as defined by any of the claims 1 to 20.

**22.** A process in accordance with claim 21 wherein said suitable absorbing conditions comprise a temperature in the range of 150°C to 600°C, a total system pressure in the range of atmospheric to 13.8 MPa (2000 psig), and a residence time for said fluid stream in the presence of said absorbing composition in the range of 10 to 10,000 volumes of gas at standard temperature and pressure per volume of said absorbing composition per hour.

**23.** A process in accordance with claim 22 additionally comprising the steps of:

discontinuing the flow of said fluid stream over said absorbing composition;

purging said absorbing composition with an inert gas after the flow of said fluid stream is discontinued;

contacting said absorbing composition, after the flow of said inert gas is discontinued, with an oxygen-containing gas under suitable regeneration conditions to thereby regenerate said absorbing composition;

discontinuing the flow of said oxygen-containing gas over said absorbing composition after said absorbing composition is substantially regenerated;

purging said absorbing composition with an inert gas after the flow of said oxygen-containing gas is discontinued;

discontinuing the flow of said inert gas over said absorbing composition after said oxygen-containing gas is substantially purged from said absorbing composition; and,

recontacting said absorbing composition with said fluid stream after the flow of said inert gas is discontinued.

**24.** A process in accordance with claim 23 wherein said suitable regeneration conditions comprise a feed rate of said oxygen-containing gas suitable to supply sufficient oxygen to remove substantially all of the sulfur from said absorbing composition, a temperature in the range of 370°C to 815°C, and a pressure of atmospheric.

**Patentansprüche**

**1.** Zusammensetzung, die Zinkoxid, Kieselgur, mindestens einen Metalloxidpromotor und gegebenenfalls mindestens ein Bindemittel umfaßt.

14

**2.** Zusammensetzung nach Anspruch 1, wobei das Zinkoxid in der Zusammensetzung in einer Menge im Bereich von 10 bis 90 Gew.-%, vorzugsweise im Bereich von 45 bis 90 Gew.-% und insbesondere im Bereich von 45 bis 60 Gew.-% vorliegt, wobei die Gew.-% als Zinkoxid, bezogen auf das Gesamtgewicht der Zusammensetzung, ausgedrückt sind.

**3.** Zusammensetzung nach Anspruch 1, wobei das Kieselgur in der Zusammensetzung in einer Menge im Bereich von 30 bis 60 Gew.-% vorliegt, wobei die Gew.-% als Kieselgur, bezogen auf das Gesamtgewicht der Zusammensetzung, ausgedruckt sind.

**4.** Zusammensetzung nach Anspruch 1, wobei das Bindemittel in der Zusammensetzung in einer Menge im Bereich von 5,0 bis 30 Gew.-% vorliegt, wobei die Gew.-% als Bindemittel, bezogen auf das Gesamtgewicht der Zusammensetzung, ausgedruckt sind.

**5.** Zusammensetzung nach Anspruch 1 oder 2, wobei das Zinkoxid in der Zusammensetzung in einer Menge im Bereich von 45 bis 60 Gew.-% vorliegt, das Kieselgur in der Zusammensetzung in einer Menge im Bereich von 30 bis 60 Gew.-% vorliegt und das Bindemittel in der Zusammensetzung in einer Menge im Bereich von 5,0 bis 15 Gew.-% vorliegt, bezogen auf das Gesamtgewicht der Zusammensetzung.

**6.** Zusammensetzung nach Anspruch 1, wobei der mindestens eine Metalloxidpromotor in der Zusammensetzung in einer Menge im Bereich von 0,1 bis 15 Gew.-% vorliegt, wobei die Gew.-% als der mindestens eine Metalloxidpromotor, bezogen auf das Gesamtgewicht der Zusammensetzung, ausgedrückt sind.

**7.** Zusammensetzung nach Anspruch 1, wobei das Zinkoxid in der Zusammensetzung in einer Menge im Bereich von 45 bis 60 Gew.-% vorliegt, das Kieselgur in der Zusammensetzung in einer Menge im Bereich von 30 bis 60 Gew.-% vorliegt und der mindestens eine Metalloxidpromotor in einer Menge im Bereich von 2,0 bis 7,5 Gew.-% vorliegt, bezogen auf das Gesamtgewicht der Zusammensetzung.

**8.** Zusammensetzung nach Anspruch 1 oder 2, wobei das Zinkoxid in der Zusammensetzung in einer Menge im Bereich von 45 bis 60 Gew.-% vorliegt, das Kieselgur in der Zusammensetzung in einer Menge im Bereich von 30 bis 60 Gew.-Z vorliegt, das mindestens eine Bindemittel in der Zusammensetzung in einer Menge im Bereich von 5,0 bis 15 Gew.-% vorliegt und der mindestens eine Metalloxidpromotor in einer Menge im Bereich von 2,0 bis 7,5 Gew.-% vorliegt, bezogen auf das Gesamtgewicht der Zusammensetzung.

**9.** Zusammensetzung nach einem der Ansprüche 4, 5 oder 8, wobei es sich bei dem Bindemittel um Aluminiumoxid oder um Calciumaluminat handelt.

**10.** Zusammensetzung nach einem der Ansprüche 6, 7 oder 8, wobei es sich bei dem mindestens einen Metalloxidpromotor um ein Oxid von mindestens einem unter Molybdän, Wolfram und den Metallen der Gruppe VIII des Periodensystems der Elemente ausgewählten Metall handelt, und wobei es sich bei dem Promotor insbesondere um Nickeloxid handelt.

**11.** Zusammensetzung nach einem der Ansprüche 1 oder 2, wobei die Zusammensetzung nach einem Verfahren hergestellt worden ist, das die folgenden Stufen umfaßt:
a) Mischen von Zinkoxid oder einer Vorstufe von Zinkoxid, Kieselgur, mindestens einem gegebenenfalls vorhandenen Bindemittel, insbesondere in Form eines festen Materials, eines trockenen Pulvers oder eines Sols, und mindestens einem gegebenenfalls vorhandenen Metalloxidpromotor oder einer gegebenenfalls vorhandenen Vorstufe des mindestens einen Metalloxidpromotors, um ein homogenes Gemisch davon zu bilden;
b) Zugabe einer verdünnten Säure zu dem homogenen Gemisch, um eine extrudierbare Paste zu bilden;
c) Extrudieren der extrudierbaren Paste, um ein Extrudat zu bilden;
d) Trocknen des Extrudats; und
e) Calcinieren des getrockneten Extrudats, um die Zusammensetzung herzustellen.

**12.** Zusammensetzung nach Anspruch 11, wobei die Vorstufe von Zinkoxid unter Zinksulfid, Zinksulfat, Zinkhydroxid, Zinkcarbonat, Zinkacetat und Zinknitrat ausgewählt ist; wobei das mindestens eine gegebenenfalls vorhandene Bindemittel unter Aluminiumoxid und Calciumaluminat ausgewählt ist; wobei die gegebenenfalls vorhandene Vorstufe des mindestens einen Metalloxids unter Metallacetaten, Metallcarbonaten, Metallnitraten, Metallsulfaten, Metallthiocyanaten und Gemischen von zwei oder mehr dieser Verbindungen ausgewählt ist; wobei es sich bei der verdünnten Säure um eine verdünnte Lösung einer Säure, die unter Salpetersäure, Essigsäure, Schwefelsäure und Salzsäure ausgewählt ist, handelt; wobei die Konzentration der Säure in der verdünnten Säure im Bereich von 1,0 bis 15 Gew.-%, bezogen auf das Gesamtgewicht der verdünnten Säure, liegt; wobei die Menge an verdünnter Säure, die zu dem homogenen Gemisch gegeben wird, zu einer Wassermenge, die zu dem homogenen Gemisch gegeben wird, im Bereich von 0,26 bis 0,38 kg Wasser/kg Feststoffe (0,26 lb bis 0,38 lb Wasser/lb Feststoffe) führt; wobei das Extrudat bei einer Temperatur im Bereich von 75 bis 300°C für eine Zeitspanne im Bereich von 0,5 bis 4 Stunden getrocknet wird; und wobei das getrocknete Extrudat in Gegenwart von Sauerstoff bei einer Temperatur im Bereich von 375 bis 750°C für eine Zeitspanne im Bereich von 0,5 bis 4 Stunden calciniert wird, um die Zusammensetzung herzustellen.

13. Zusammensetzung nach Anspruch 11, wobei die Zusammensetzung nach einem Verfahren hergestellt worden ist, das die folgenden Stufen umfaßt:

a) Mischen von pulverisiertem Zinkoxid mit Kieselgur, um ein homogenes Gemisch daraus zu bilden;
b) Zugabe von verdünnter Essigsäure mit einer Säurekonzentration im Bereich von 1,0 bis 5,0 Gew.-%, bezogen auf das Gesamtgewicht der verdünnten Säure, zu dem homogenen Gemisch, um eine extrudierbare Paste zu bilden;
c) Extrudieren der extrudierbaren Paste, um ein Extrudat zu bilden;
d) Trocknen des Extrudats bei einer Temperatur im Bereich von 90 bis 250°C für eine Zeitspanne im Bereich von 1 bis 3 Stunden; und
e) Calcinieren des getrockneten Extrudats in Gegenwart von Sauerstoff bei einer Temperatur im Bereich von 500 bis 700°C für eine Zeitspanne im Bereich von 1 bis 3 Stunden, um die Zusammensetzung zu bilden,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 lb bis 0,30 lb Wasser/lb Feststoffe) führt.

14. Zusammensetzung nach Anspruch 5, wobei die Zusammensetzung nach einem Verfahren hergestellt worden ist, das die folgenden Stufen umfaßt:

a) Mischen von pulverisiertem Zinkoxid, Kieselgur und Aluminiumoxid als Bindemittel, um ein homogenes Gemisch daraus zu bilden;
b) Zugabe von verdünnter Essigsäure mit einer Säurekonzentration im Bereich von 1,0 bis 5,0 Gew.-%, bezogen auf das Gesamtgewicht der verdünnten Säure, zu dem homogenen Gemisch, um eine extrudierbare Paste zu bilden;
c) Extrudieren der extrudierbaren Paste, um ein Extrudat zu bilden;
d) Trocknen des Extrudats bei einer Temperatur im Bereich von 90 bis 250°C für eine Zeitspanne im Bereich von 1 bis 3 Stunden; und
e) Calcinieren des getrockneten Extrudats in Gegenwart von Sauerstoff bei einer Temperatur im Bereich von 500 bis 700°C für eine Zeitspanne im Bereich von 1 bis 3 Stunden, um die Zusammensetzung zu bilden,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 lb bis 0,30 lb Wasser/lb Feststoffe) führt.

15. Zusammensetzung nach Anspruch 7, wobei die Zusammensetzung nach einem Verfahren hergestellt worden ist, das die folgenden Stufen umfaßt:

a) Mischen von pulverisiertem Zinkoxid, Kieselgur und Nickeloxid oder Nickelnitrat als Promotor, um ein homogenes Gemisch daraus zu bilden;
b) Zugabe von verdünnter Essigsäure mit einer Säurekonzentration im Bereich von 1,0 bis 5,0 Gew.-%, bezogen auf das Gesamtgewicht der verdünnten Säure, zu dem homogenen Gemisch, um eine extrudierbare Paste zu bilden;
c) Extrudieren der extrudierbaren Paste, um ein Extrudat zu bilden;
d) Trocknen des Extrudats bei einer Temperatur im Bereich von 90 bis 250°C für eine Zeitspanne im Bereich von 1 bis 3 Stunden; und
e) Calcinieren des getrockneten Extrudats in Gegenwart von Sauerstoff bei einer Temperatur im Bereich von 500 bis 700°C für eine Zeitspanne im Bereich von 1 bis 3 Stunden, um die Zusammensetzung herzustellen,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 lb bis 0,30 lb Wasser/lb Feststoffe) führt.

16. Zusammensetzung nach Anspruch 10, wobei die Zusammensetzung durch folgendes Verfahren hergestellt wurde:

a) Mischen von Zinkoxid oder einer Vorstufe von Zinkoxid mit Kieselgur, um ein homogenes Gemisch daraus zu bilden;

b) Zugabe einer verdünnten Säure zu dem homogenen Gemisch, um eine extrudierbare Paste zu bilden;

c) Extrudieren der extrudierbaren Paste, um ein Extrudat zu bilden;

d) Trocknen des Extrudats;

e) Calcinieren des getrockneten Extrudats;

f) Zugabe mindestens eines Metalloxidpromotors oder mindestens einer Vorstufe des mindestens einen Metalloxidpromotors zu dem getrockneten, calcinierten Extrudat, um ein mit einem Promotor versehenes Extrudat herzustellen;

g) Trocknen des mit dem Promotor versehenen Extrudats; und

h) Calcinieren des getrockneten, mit dem Promotor versehenen Extrudats, um die Zusammensetzung herzustellen.

17. Zusammensetzung nach Anspruch 16, wobei die Vorstufe von Zinkoxid unter Zinksulfid, Zinksulfat, Zinkhydroxid, Zinkcarbonat, Zinkacetat und Zinknitrat ausgewählt ist; wobei es sich bei der verdünnten Säure um eine verdünnte Lösung einer unter Salpetersäure, Essigsäure, Schwefelsäure und Salzsäure ausgewählten Säure handelt; wobei die Konzentration der Säure in der verdünnten Säure im Bereich von 1,0 bis 15 Gew.-%, bezogen auf das Gesamtgewicht der verdünnten Säure, liegt; wobei die Menge der verdünnten Säure, die zu dem homogenen Gemisch gegeben wird, zu einer Wassermenge, die zu dem homogenen Gemisch gegeben wird, im Bereich von 0,26 bis 0,38 kg Wasser/kg Feststoffe (0,26 lb bis 0,38 lb Wasser/lb Feststoffe) führt; wobei das Extrudat bei einer Temperatur im Bereich von 75 bis 300°C für eine Zeitspanne im Bereich von 0,5 bis 4 Stunden getrocknet wird; wobei das getrocknete Extrudat in Gegenwart von Sauerstoff bei einer Temperatur im Bereich von 375 bis 750°C für eine Zeitspanne im Bereich von 0,5 bis 4 Stunden calciniert wird, um die Zusammensetzung herzustellen; wobei die Vorstufe des mindestens einen Metalloxids unter Metallacetaten, Metallcarbonaten, Metallnitraten, Metallsulfaten, Metallthiocyanaten und Gemischen von zwei oder mehr dieser Verbindungen ausgewählt wird; wobei das mit dem Promotor versehene Extrudat bei einer Temperatur im Bereich von 75 bis 300°C für eine Zeitspanne im Bereich von 0,5 bis 8 Stunden getrocknet wird; und wobei das getrocknete, mit dem Promotor versehende Extrudat in Gegenwart von Sauerstoff bei einer Temperatur im Bereich von 375 bis 750°C für eine Zeitspanne im Bereich von 0,5 bis 4 Stunden calciniert wird, um die Zusammensetzung herzustellen.

18. Zusammensetzung nach Anspruch 7, wobei die Zusammensetzung nach einem Verfahren hergestellt wurde, das die folgenden Stufen umfaßt:

a) Mischen von pulverisiertem Zinkoxid und Kieselgur, um ein homogenes Gemisch daraus zu bilden;

b) Zugabe verdünnter Essigsäure mit einer Konzentration im Bereich von 1,0 bis 5,0 Gew.-%, bezogen auf das Gesamtgewicht der verdünnten Säure, zu dem homogenen Gemisch, um eine extrudierbare Paste zu bilden;

c) Extrudieren der extrudierbaren Paste, um ein Extrudat zu bilden;

d) Trocknen des Extrudats bei einer Temperatur im Bereich von 90 bis 250°C für eine Zeitspanne im Bereich von 1 bis 3 Stunden;

e) Calcinieren des getrockneten Extrudats in Gegenwart von Sauerstoff bei einer Temperatur im Bereich von 500 bis 700°C für eine Zeitspanne im Bereich von 1 bis 3 Stunden;

f) Zugabe von Nickeloxid oder Nickelnitrat zu dem getrockneten, calcinierten Extrudat, um ein mit dem Promotor versehenes Extrudat herzustellen;

g) Trocknen des mit dem Promotor versehenen Extrudats bei einer Temperatur im Bereich von 90 bis 250°C für eine Zeitspanne im Bereich von 3 bis 5 Stunden; und

h) Calcinieren des getrockneten, mit dem Promotor versehenen Extrudats in Gegenwart von Sauerstoff bei einer Temperatur im Bereich von 500 bis 700°C für eine Zeitspanne im Bereich von 1 bis 3 Stunden, um die Zusammensetzung herzustellen,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 bis 0,30 lb Wasser/lb Feststoffe) führt.

19. Zusammensetzung nach Anspruch 8, wobei die Zusammensetzung nach einem Verfahren hergestellt wurde, das die folgenden Stufen umfaßt:

a) Mischen von pulverisiertem Zinkoxid, Kieselgur, Aluminiumoxid als Bindemittel und Nickeloxid oder Nickelnitrat als Promotor, um ein homogenes Gemisch daraus zu bilden;

b) Zugabe von verdünnter Essigsäure mit einer Konzentration im Bereich von 1,0 bis 5,0 Gew.-%, bezogen auf das Gesamtgewicht der verdünnten Säure, zu dem homogenen Gemisch, um eine extrudierbare Paste zu bilden;

c) Extrudieren der extrudierbaren Paste, um ein Extrudat zu bilden;

d) Trocknen des Extrudats bei einer Temperatur im Bereich von 90 bis 250°C für eine Zeitspanne im Bereich von 1 bis 3 Stunden; und

e) Calcinieren des getrockneten Extrudats in Gegenwart von Sauerstoff bei einer Temperatur im Bereich von 500 bis 700°C für eine Zeitspanne im Bereich von 1 bis 3 Stunden, um die Zusammensetzung herzustellen,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 bis 0,30 lb Wasser/lb Feststoffe) führt.

20. Zusammensetzung nach Anspruch 8, wobei die Zusammensetzung nach einem Verfahren hergestellt wurde, das die folgenden Stufen umfaßt:

a) Mischen von pulverisiertem Zinkoxid, Kieselgur und Aluminiumoxid als Bindemittel, um ein homogenes Gemisch daraus zu bilden;

b) Zugabe von verdünnter Essigsäure mit einer Säurekonzentration im Bereich von 1,0 bis 5,0 Gew.-%, bezogen auf das Gesamtgewicht der verdünnten Säure, zu dem homogenen Gemisch, um eine extrudierbare Paste zu bilden;

c) Extrudieren der extrudierbaren Paste, um ein Extrudat zu bilden;

d) Trocknen des Extrudats bei einer Temperatur im Bereich von 90 bis 250°C für eine Zeitspanne im Bereich von 1 bis 3 Stunden;

e) Calcinieren des getrockneten Extrudats in Gegenwart von Sauerstoff bei einer Temperatur im Bereich von 500 bis 700°C für eine Zeitspanne im Bereich von 1 bis 3 Stunden;

f) Zugabe von Nickeloxid oder Nickelnitrat als Promotor zu dem getrockneten, calcinierten Extrudat, um ein mit einem Promotor versehenes Extrudat herzustellen;

g) Trocknen des mit dem Promotor versehenen Extrudats bei einer Temperatur im Bereich von 90 bis 250°C für eine Zeitspanne im Bereich von 3 bis 5 Stunden;

h) Calcinieren des getrockneten, mit dem Promotor versehenen Extrudats in Gegenwart von Sauerstoff bei einer Temperatur im Bereich von 500 bis 700°C für eine Zeitspanne im Bereich von 1 bis 3 Stunden, um die Zusammensetzung herzustellen,

wobei die Menge an verdünnter Essigsäure, die zu dem homogenen Gemisch gegeben wird, zu einer Wassermenge, die zu dem homogenen Gemisch gegeben wird, im Bereich von 0,26 bis 0,30 kg Wasser/kg Feststoffe (0,26 lb bis 0,30 lb Wasser/lb Feststoffe) führt.

21. Verfahren zur Entfernung Schwefelwasserstoff aus einem Fluidstrom, der Schwefelwasserstoff enthält, das die Stufe des Kontaktierens des Fluidstroms unter geeigneten Absorptionsbedingungen mit einer absorbierenden Zusammensetzung, wie sie in einem der Ansprüche 1 bis 20 definiert ist, umfaßt.

22. Verfahren nach Anspruch 21, wobei die geeigneten Absorptionsbedingungen eine Temperatur im Bereich von 150 bis 600°C, einen gesamten Systemdruck im Bereich von atmosphärischem Druck bis 13,8 MPa (2000 psig) und eine Verweilzeit des Fluidstroms in Gegenwart der absorbierenden Zusammensetzung im Bereich von 10 bis 10000 Volumenteilen Gas bei Standardtemperatur und Standarddruck pro Volumenteil der absorbierenden Zusammensetzung pro Stunde umfassen.

23. Verfahren nach Anspruch 22, das zusätzlich folgende Stufen umfaßt:

Unterbrechen des Fluidstroms über die absorbierende Zusammensetzung;

Spülen der absorbierenden Zusammensetzung mit einem inerten Gas, nachdem der Fluidstrom unterbrochen worden ist;

Kontaktieren der absorbierenden Zusammensetzung, nachdem der Strom des inerten Gases unterbrochen worden ist, mit einem Sauerstoff enthaltenden Gas unter geeigneten Regenerierungsbedin-

EP 0 401 789 B1

gungen, um dabei die absorbierende Zusammensetzung zu regenerieren;

Unterbrechen des Stroms des Sauerstoff enthaltenden Gases über die absorbierende Zusammensetzung, nachdem die absorbierende Zusammensetzung weitgehend regeneriert ist;

Spülen der absorbierenden Zusammensetzung mit einem inerten Gas, nachdem der Strom des Sauerstoff enthaltenden Gases unterbrochen worden ist;

Unterbrechen des Stroms des inerten Gases über die absorbierende Zusammensetzung, nachdem das Sauerstoff enthaltende Gas weitgehend von der absorbierenden Zusammensetzung gespült worden ist; und

erneutes Kontaktieren der absorbierenden Zusammensetzung mit dem Fluidstrom, nachdem der Strom des inerten Gases unterbrochen worden ist.

24. Verfahren nach Anspruch 23, wobei die geeigneten Regenerierungsbedingungen eine Zufuhrrate des Sauerstoff enthaltenden Gases, die geeignet ist, ausreichend Sauerstoff bereit zu stellen, um im wesentlichen allen Schwefel von der absorbierenden Zusammensetzung zu entfernen, eine Temperatur im Bereich von 370 bis 815°C und einen atmosphärischen Druck umfassen.


**Revendications**

1. Une composition comprenant de l'oxyde de zinc, de la terre de diatomée, au moins un promoteur d'oxyde métallique et éventuellement au moins un liant.

2. Une composition selon la revendication 1, dans laquelle ledit oxyde de zinc est présent dans ladite composition selon une quantité comprise dans la gamme de 10% en poids à 90% en poids, en particulier dans la gamme de 45% en poids à 90% en poids, plus particulièrement dans la gamme de 45% en poids à 60% en poids, lesdits % en poids étant exprimés en fonction de l'oxyde de zinc par rapport au poids total de la composition.

3. Une composition selon la revendication 1 dans laquelle ladite terre de diatomée est présente dans ladite composition selon une quantité comprise dans la gamme de 30% en poids à 60% en poids, lesdits % en poids étant exprimés en fonction de la terre de diatomée par rapport au poids total de la composition.

4. Une composition selon la revendication 1 dans laquelle ledit liant est présent dans ladite composition selon une quantité comprise dans la gamme de 5,0% en poids à 30% en poids, lesdits % en poids étant exprimés en fonction du liant par rapport au poids total de la composition.

5. Une composition selon la revendication 1 ou la revendication 2, dans laquelle ledit oxyde de zinc est présent dans ladite composition selon une quantité comprise dans la gamme de 45% en poids à 60% en poids, ladite terre de diatomée est présente dans ladite composition selon une quantité comprise dans la gamme de 30% en poids à 60% en poids et ledit liant est présent en une quantité comprise dans la gamme de 5,0% en poids à 15% en poids par rapport au poids total de la composition.

6. Une composition selon la revendication 1 dans laquelle au moins ledit promoteur d'oxyde métallique est présent dans ladite composition selon une quantité comprise dans la gamme de 0,1% en poids à 15% en poids, lesdits % en poids étant exprimés en fonction d'au moins ledit promoteur d'oxyde métallique par rapport au poids total de la composition.

7. Une composition selon la revendication 1 dans laquelle ledit oxyde de zinc est présent dans ladite composition selon une quantité comprise dans la gamme de 45% en poids à 60% en poids, ladite terre de diatomée est présente dans ladite composition selon une quantité comprise dans la gamme de 30% en poids à 60% en poids et au moins ledit promoteur d'oxyde métallique est présent en une quantité comprise dans la gamme de 2,0% en poids à 7,5% en poids par rapport au poids total de la composition.

8. Une composition selon la revendication 1 ou la revendication 2 dans laquelle ledit oxyde de zinc est présent dans ladite composition selon une quantité comprise dans la gamme de 45% en poids à 60% en poids, ladite terre de diatomée est présente dans ladite composition selon une quantité comprise dans la gamme de 30% en poids à 60% en poids, au moins ledit liant est présent dans ladite composition selon une quantité comprise dans la gamme de 5,0% en poids à 15% en poids et au moins ledit promoteur d'oxyde métallique est présent en une quantité comprise dans la gamme de 2,0% en poids à 7,5% en poids par rapport au poids total de la composition.

9. Une composition selon l'une quelconque des revendications 4, 5 ou 8 dans laquelle ledit liant est de l'alumine ou de l'aluminate de calcium.

10. Une composition selon l'une quelconque des revendications 6, 7 ou 8 dans laquelle au moins ledit promoteur d'oxyde métallique est un oxyde d'au moins un métal choisi parmi le groupe comprenant le molybdène, le tungstène et les métaux du groupe VIII du Tableau Périodique, en particulier dans laquelle ledit promoteur est de l'oxyde de nickel.

11. Une composition selon la revendication 1 ou la revendication 2 dans laquelle ladite composition est préparée par un procédé comprenant les étapes consistant à:
    a) mélanger de l'oxyde de zinc ou un précurseur d'oxyde de zinc, de la terre de diatomée, au moins un liant lorsqu'il est présent, en particulier sous la forme d'une matière solide, une poudre anhydre ou un sol et au moins un promoteur d'oxyde métallique, lorsqu'il est présent, ou un précurseur d'au moins un promoteur d'oxyde métallique, lorsqu'il est présent pour former un mélange homogène de ceux-ci
    b) ajouter un acide dilué audit mélange homogène pour former une pâte susceptible d'être extrudée ;
    c) extruder ladite pâte susceptible d'être extrudée pour former un extrudat ;
    d) sécher ledit extrudat ; et
    e) calciner l'extrudat séché pour produire ladite composition.

12. Une composition selon la revendication 11 dans laquelle ledit précurseur d'oxyde de zinc est choisi parmi le groupe comprenant le sulfure de zinc, le sulfate de zinc, l'hydroxyde de zinc, le carbonate de zinc, l'acétate de zinc et le nitrate de zinc ; au moins ledit liant lorsqu'il est présent est choisi parmi le groupe comprenant l'alumine et l'aluminate de calcium, ledit précurseur au moins dudit oxyde métallique lorsqu'il est présent est choisi parmi le groupe comprenant les acétates de métaux, les carbonates de métaux, les nitrates de métaux, les sulfates de métaux, les thiocyanates de métaux et des mélanges de deux ou plusieurs de ceux-ci ; ledit acide dilué est une solution diluée d'un acide choisi parmi le groupe comprenant l'acide nitrique, l'acide acétique, l'acide sulfurique et l'acide chlorhydrique ; la concentration dudit acide dans ledit acide dilué est comprise dans la gamme de 1,0% en poids à 15% en poids par rapport au poids total de l'acide dilué ; la quantité d'acide dilué ajoutée audit mélange homogène entraîne l'addition d'eau audit mélange homogène selon une quantité comprise dans la gamme de 0,26 à 0,38 kg d'eau/kg de solides (0,26 livre à 0,38 livre d'eau/livre de solides) ; ledit extrudat est séché à une température comprise dans la gamme de 75°C à 300°C pendant une durée comprise dans la gamme de 0,5 heure à 4 heures et ledit extrudat séché est calciné en présence d'oxygène à une température comprise dans la gamme de 375°C à 750°C pendant une durée comprise dans la gamme de 0,5 heure à 4 heures pour produire ladite composition.

13. Une composition selon la revendication 11 dans laquelle ladite composition est préparée par le procédé comprenant les étapes consistant à :
    a) mélanger de l'oxyde de zinc en poudre avec de la terre de diatomée pour former un mélange homogène de ceux-ci ;
    b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;
    c) extruder ladite pâte susceptible d'être extrudée pour former un extrudat ;
    d) sécher ledit extrudat à une température comprise dans la gamme de 90°C à 250°C pendant une durée comprise dans la gamme de 1 heure à 3 heures et
    e) calciner l'extrudat séché en présence d'oxygène à une température comprise dans la gamme de 500°C à 700°C pendant une durée comprise dans la gamme de 1 heure à 3 heures pour produire ladite composition,
    où la quantité d'acide acétique dilué ajoutée audit mélange homogène a pour effet l'addition d'eau audit mélange homogène selon une quantité comprise dans la gamme de 0,26 à 0,30 kg d'eau/kg de solides (0,26 livre à 0,30 livre d'eau/livre de solides).

14. Une composition selon la revendication 5 dans laquelle ladite composition est préparée par le procédé comprenant les étapes consistant à :
    a) mélanger de l'oxyde de zinc en poudre, de la terre de diatomée et de l'alumine en tant que ledit liant pour former un mélange homogène de ceux-ci;
    b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;

c) extruder ladite pâte susceptible d'être extrudée pour former un extrudat ;

d) sécher ledit extrudat à une température comprise dans la gamme de 90°C à 250°C pendant une durée comprise dans la gamme de 1 heure à 3 heures et

e) calciner l'extrudat séché en présence d'oxygène à une température comprise dans la gamme de 500°C à 700°C pendant une durée comprise dans la gamme de 1 heure à 3 heures pour produire ladite composition,

où la quantité d'acide acétique dilué ajoutée audit mélange homogène a pour effet l'addition d'eau audit mélange homogène selon une quantité comprise dans la gamme de 0,26 à 0,30 kg d'eau/kg de solides (0,26 livre à 0,30 livre d'eau)/livre de solides).

15. Une composition selon la revendication 7 dans laquelle ladite composition est préparée par le procédé consistant à :

a) mélanger de l'oxyde de zinc en poudre, de la terre de diatomée et de l'oxyde de nickel ou du nitrate de nickel comme promoteur pour former un mélange homogène de ceux-ci ;

b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;

c) extruder ladite pâte susceptible d'être extrudée pour former un extrudat ;

d) sécher ledit extrudat à une température comprise dans la gamme de 90°C à 250°C pendant une durée comprise dans la gamme de 1 heure à 3 heures et

e) calciner l'extrudat séché en présence d'oxygène à une température comprise dans la gamme de 500°C à 700°C pendant une durée comprise dans la gamme de 1 heure à 3 heures pour produire ladite composition,

où la quantité d'acide acétique dilué ajoutée audit mélange homogène a pour effet l'addition d'eau audit mélange homogène selon une quantité comprise dans la gamme de 0,26 à 0,30 kg d'eau/kg de solides (0,26 livre à 0,30 livre d'eau/livre de solides).

16. Une composition selon la revendication 10 dans laquelle ladite composition est préparée par :

a) mélange d'oxyde de zinc ou d'un précurseur d'oxyde de zinc avec de la terre de diatomée pour former un mélange homogène de ceux-ci ;

b) addition d'un acide dilué audit mélange homogène pour former une pâte susceptible d'être extrudée ;

c) extrusion de ladite pâte susceptible d'être extrudée pour former un extrudat ;

d) séchage dudit extrudat ;

e) calcination de l'extrudat séché ;

f) addition d'au moins un promoteur d'oxyde métallique ou d'au moins un précurseur d'au moins un promoteur d'oxyde métallique à l'extrudat calciné, séché pour produire un extrudat activé ;

g) séchage dudit extrudat activé et

h) calcination de l'extrudat activé, séché pour produire ladite composition.

17. Une composition selon la revendication 16 dans laquelle ledit précurseur d'oxyde de zinc est choisi parmi le groupe comprenant le sulfure de zinc, le sulfate de zinc, l'hydroxyde de zinc, le carbonate de zinc, l'acétate de zinc et le nitrate de zinc ; ledit acide dilué est une solution diluée d'un acide choisi parmi le groupe comprenant l'acide nitrique, l'acide acétique, l'acide sulfurique et l'acide chlorhydrique ; la concentration dudit acide dans ledit acide dilué est comprise dans la gamme de 1,0% en poids à 15% en poids par rapport au poids total de l'acide dilué ; la quantité de l'acide dilué ajoutée audit mélange homogène a pour effet l'addition d'eau audit mélange homogène selon une quantité comprise dans la gamme de 0,26 à 0,38 kg d'eau/kg de solides (0,26 livre à 0,38 livre d'eau/livre de solides) ; ledit extrudat est séché à une température comprise dans la gamme de 75°C à 300°C pendant une durée comprise dans la gamme de 0,5 heure à 4 heures ; ledit extrudat séché est calciné en présence d'oxygène à une température comprise dans la gamme de 375°C à 750°C pendant une durée comprise dans la gamme de 0,5 heure à 4 heures pour produire ladite composition ; ledit précurseur d'au moins un oxyde métallique est choisi dans le groupe comprenant les acétates de métaux, les carbonates de métaux, les nitrates de métaux, les sulfates de métaux, les thiocyanates de métaux et des mélanges de deux ou plusieurs de ceux-ci ; ledit extrudat activé est séché à une température comprise dans la gamme de 75°C à 300°C pendant une durée comprise dans la gamme de 0,5 heure à 8 heures et ledit extrudat activé séché est calciné en présence d'oxygène à une température comprise dans la gamme de 375°C à 750°C pendant une durée comprise dans la gamme de 0,5 heure à 4 heures pour produire ladite composition.

18. Une composition selon la revendication 7 dans laquelle ladite composition est préparée par le procédé comprenant les étapes consistant à :

a) mélanger de l'oxyde de zinc en poudre et de la terre de diatomée pour former un mélange homogène de ceux-ci ;

b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;

c) extruder ladite pâte susceptible d'être extrudée pour former un extrudat ;

d) sécher ledit extrudat à une température comprise dans la gamme de 90°C à 250°C pendant une durée comprise dans la gamme de 1 heure à 3 heures ;

e) calciner l'extrudat séché en présence d'oxygène à une température comprise dans la gamme de 500°C à 700°C pendant une durée comprise dans la gamme de 1 heure à 3 heures ;

f) ajouter de l'oxyde de nickel ou du nitrate de nickel à l'extrudat calciné, séché pour produire un extrudat activé ;

g) sécher ledit extrudat activé à une température comprise dans la gamme de 90°C à 250°C pendant une durée comprise dans la gamme de 3 heures à 5 heures, et

h) calciner l'extrudat activé, séché en présence d'oxygène à une température comprise dans la gamme de 500°C à 700°C pendant une durée comprise dans la gamme de 1 heure à 3 heures pour produire ladite composition, où la quantité d'acide acétique dilué ajoutée audit mélange homogène a pour effet l'addition d'eau audit mélange homogène selon une quantité comprise dans la gamme de 0,26 à 0,30 kg/d'eau/kg de solides (0,26 livre à 0,30 livre d'eau/livre de solides).

19. Une composition selon la revendication 8 dans laquelle ladite composition est préparée par le procédé comprenant les étapes consistant à :

a) mélanger de l'oxyde de zinc en poudre, de la terre de diatomée, de l'alumine en tant que liant et de l'oxyde de nickel ou du nitrate de nickel comme promoteur pour former un mélange homogène de ceux-ci ;

b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;

c) extruder ladite pâte susceptible d'être extrudée pour former un extrudat ;

d) sécher ledit extrudat à une température comprise dans la gamme de 90°C à 250°C pendant une durée comprise dans la gamme de 1 heure à 3 heures et

e) calciner l'extrudat séché en présence d'oxygène à une température comprise dans la gamme de 500°C à 700°C pendant une durée comprise dans la gamme de 1 heure à 3 heures pour produire ladite composition,

où la quantité d'acide acétique dilué ajoutée audit mélange homogène a pour effet l'addition d'eau audit mélange homogène selon une quantité comprise dans la gamme de 0,26 à 0,30 kg d'eau/kg de solides (0,26 livre d'eau/livre de solides à 0,30 livre d'eau/livre de solides).

20. Une composition selon la revendication 8 dans laquelle ladite composition est préparée par le procédé comprenant les étapes consistant à :

a) mélanger de l'oxyde de zinc en poudre, de la terre de diatomée et de l'alumine en tant que liant pour former un mélange homogène de ceux-ci

b) ajouter de l'acide acétique dilué ayant une concentration en acide comprise dans la gamme de 1,0% en poids à 5,0% en poids par rapport au poids total de l'acide dilué audit mélange homogène pour former une pâte susceptible d'être extrudée ;

c) extruder ladite pâte susceptible d'être extrudée pour former un extrudat ;

d) sécher ledit extrudat à une température comprise dans la gamme de 90°C à 250°C pendant une durée comprise dans la gamme de 1 heure à 3 heures,

e) calciner l'extrudat séché en présence d'oxygène à une température comprise dans la gamme de 500°C à 700°C pendant une durée comprise dans la gamme de 1 heure à 3 heures,

f) ajouter de l'oxyde de nickel ou du nitrate de nickel comme promoteur à l'extrudat calciné, séché pour produire un extrudat activé,

g) sécher ledit extrudat activé à une température comprise dans la gamme de 90°C à 250°C pendant une durée comprise dans la gamme de 3 heures à 5 heures et,

h) calciner l'extrudat activé, séché en présence d'oxygène à une température comprise dans la gamme de 500°C à 700°C pendant une durée comprise dans la gamme de 1 heure à 3 heures pour produire ladite composition, où la quantité d'acide acétique dilué ajoutée audit mélange homogène a pour effet l'addition d'eau audit mélange homogène selon une quantité comprise dans la gamme de 0,26 à 0,30 kg d'eau/kg de solides (0,26 livre à 0,30 livre d'eau/livre de solides).

21. Un procédé pour éliminer de l'hydrogène sulfuré d'un courant fluide contenant de l'hydrogène sulfuré comprenant l'étape de mise en contact dudit courant fluide sous des conditions absorbantes appropriées avec une composition absorbante comme défini dans l'une quelconque des revendications 1 à 20.

22. Un procédé selon la revendication 21 dans lequel lesdites conditions absorbantes appropriées comprennent une température comprise dans la gamme de 150°C à 600°C, une pression totale du système comprise dans la gamme de la pression atmosphérique à 13,8 MPa (2000 psig) et une durée de séjour pour ledit courant fluide en présence de ladite composition absorbante comprise dans la gamme de 10 à 10.000 volumes de gaz à la température et à la pression standard par volume de ladite composition absorbante par heure.

23. Un procédé selon la revendication 22 comprenant supplémentairement les étapes consistant à :
arrêter l'écoulement dudit courant fluide sur ladite composition absorbante ;
purger ladite composition absorbante avec un gaz inerte après l'arrêt de l'écoulement dudit courant fluide ;
mettre en contact ladite composition absorbante après l'arrêt de l'écoulement dudit gaz inerte avec un gaz renfermant de l'oxygène sous des conditions de régénération appropriées pour régénérer ainsi ladite composition absorbante ;
arrêter l'écoulement dudit gaz renfermant de l'oxygène sur ladite composition absorbante après que ladite composition absorbante a été essentiellement régénérée;
purger ladite composition absorbante avec un gaz inerte après l'arrêt de l'écoulement dudit gaz renfermant de l'oxygène ;
arrêter l'écoulement dudit gaz inerte sur ladite composition absorbante après que ledit gaz renfermant de l'oxygène a été essentiellement purgé de ladite composition absorbante et,
effectuer une remise en contact de ladite composition absorbante avec ledit courant fluide après l'arrêt de l'écoulement dudit gaz inerte.

24. Un procédé selon la revendication 23 dans lequel lesdites conditions de régénération appropriées comprennent un taux d'alimentation dudit gaz renfermant de l'oxygène approprié pour amener suffisamment d'oxygène pour éliminer essentiellement tout le soufre de ladite composition absorbante, une température comprise dans la gamme de 370°C à 815°C et une pression correspondant à la pression atmosphérique.